# EUROPEAN PATENT SPECIFICATION

(11) **EP 2 783 793 B1**
(45) Date of publication and mention of the grant of the patent: **02.11.2016**
(21) Application number: 12852271.1
(22) Date of filing: 20.02.2012
(51) Int. Cl.: B23F 23/12, B24B 53/075, B24B 53/085

(54) **DRESSING METHOD FOR DRUM-SHAPED GEAR-LIKE GRINDSTONE**
VERFAHREN ZUM ABRICHTEN EINES TROMMELFÖRMIGEN ZAHNRADARTIGEN SCHLEIFSTEINS
PROCÉDÉ DE DRESSAGE POUR MEULE DE TYPE ROUE DENTÉE EN FORME DE TAMBOUR

(30) Priority: 25.11.2011 JP 2011256980
(43) Date of publication of application: 01.10.2014
(73) Proprietor: Mitsubishi Heavy Industries Machine Tool Co., Ltd., Shiga, 520-3080 (JP)
(72) Inventor: YANASE Yoshikoto, Tokyo 108-8215 (JP); OCHI Masashi, Tokyo 108-8215 (JP); NAKAMICHI Yasuhiro, Tokyo 108-8215 (JP)
(74) Representative: Studio Torta S.p.A.
(86) International application number: PCT/JP2012/053909
(87) International publication number: WO 2013/077005

(56) References cited:
- EP-A1- 2 177 316
- EP-A2- 2 036 672
- DE-A1- 4 231 021
- DE-C1- 19 625 520
- JP-A- 2006 026 789
- JP-A- 2009 045 681
- KR-A- 20070 092 587
- US-A- 5 823 857

## Description

### TECHNICAL FIELD

The present invention relates to an hourglass gear-shaped grinding-wheel dressing method of dressing an hourglass gear-shaped grinding wheel capable of grinding a helical gear.

### BACKGROUND ART

Heretofore, for grinding a gear, various types of grinding wheels for efficiently finishing the tooth surfaces thereof have been used. As such a grinding wheel is used for grinding, the grinding wheel wears and loses its sharpness. For this reason, after grinding a predetermined number of gears, the worn grinding wheel needs to be dressed to restore its edge surfaces to sharp edge surfaces.

In view of this, there have heretofore been provided grinding-wheel dressing methods of dressing a worn grinding wheel with various types of dressers. For example, Patent Document 1 discloses an hourglass gear-shaped grinding-wheel dressing method of dressing an hourglass gear-shaped grinding wheel with a dressing gear.

### PRIOR ART DOCUMENT

### PATENT DOCUMENT

Patent Document 1: Japanese Patent Application Publication No. Hei 10-58230 & DE 196 25 520 C1

### SUMMARY OF THE INVENTION

### PROBLEMS TO BE SOLVED BY THE INVENTION

However, in the above conventional dressing method, since the dressing is performed using a dressing gear, the tooth profile of every single tooth of the dressing gear must be machined within a predetermined range of accuracy. Thus, controlling the accuracy of the tooth profile is extremely difficult.

Moreover, when a dressing gear is employed as in the conventional dressing method, subtly correcting or simply changing the tooth profile of a gear requires changing the tooth profile of the dressing gear accordingly, and further requires changing the edge profile of a gear-shaped grinding wheel via dressing with this dressing gear. In other words, the conventional dressing method requires changing the tooth profile of the dressing gear and the edge profile of the gear-shaped grinding wheel every time the tooth profile of the gear is changed for some reason.

Thus, the present invention has been made to solve the above problems, and an object thereof is to provide an hourglass gear-shaped grinding-wheel dressing method capable of accurately dressing an hourglass gear-shaped grinding wheel and also changing the edge profile of the gear-shaped grinding wheel without changing the edge profile of the disk dresser.

### MEANS FOR SOLVING THE PROBLEMS

An hourglass gear-shaped grinding-wheel dressing method according to a first aspect of the invention for solving the above-mentioned problems is an hourglass gear-shaped grinding-wheel dressing method of dressing an hourglass gear-shaped grinding wheel with a disk dresser formed in a circular disk shape, by synchronously rotating the gear-shaped grinding wheel and the disk dresser in mesh with each other, the gear-shaped grinding wheel being configured to grind a helical gear by coming into line contact with the helical gear in such a way as to connect contours of normal planes of teeth of the helical gear, the normal planes being perpendicular to a helical direction of the teeth, characterized in that the hourglass gear-shaped grinding-wheel dressing method comprises:
matching an edge profile of the disk dresser with a profile of the normal plane of each of the teeth of the helical gear after grinding;
moving the gear-shaped grinding wheel and the disk dresser relative to each other in directions of three perpendicular axes in accordance with a hourglass shape and a helix angle of the gear-shaped grinding wheel;
turning the disk dresser about a dresser turn axis to a predetermined turn angle in accordance with the helix angle of the gear-shaped grinding wheel and positioning the disk dresser at the predetermined turn angle, the dresser turn axis perpendicularly crossing a dresser rotation axis of the disk dresser; and
turning the disk dresser about a gear rotation axis of the helical gear.

An hourglass gear-shaped grinding-wheel dressing method according to a second aspect of the invention for solving the above-mentioned problems is an hourglass gear-shaped grinding-wheel dressing method of dressing an hourglass gear-shaped grinding wheel with a disk dresser formed in a circular disk shape, by synchronously rotating the gear-shaped grinding wheel and the disk dresser in mesh with each other, the gear-shaped grinding wheel being configured to grind a helical gear by coming into line contact with the helical gear in such a way as to connect contours of normal planes of teeth of the helical gear, the normal planes being perpendicular to a helical direction of the teeth, characterized in that the hourglass gear-shaped grinding-wheel dressing method comprises:
matching an edge profile of the disk dresser with a profile of the normal plane of each of the teeth of the helical gear after grinding;
moving the gear-shaped grinding wheel and the disk dresser relative to each other in directions of three perpendicular axes in accordance with a hourglass shape and a helix angle of the gear-shaped grinding wheel; and
turning the disk dresser about a dresser turn axis in accordance with the helix angle of the gear-shaped grinding wheel, the dresser turn axis perpendicularly crossing a dresser rotation axis of the disk dresser.

### EFFECTS OF THE INVENTION

Thus, in the hourglass gear-shaped grinding-wheel dressing methods according to the present invention, the hourglass gear-shaped grinding wheel capable of coming into line contact with the helical gear in such a way as to connect the contours of the normal planes of teeth of the helical gear, is dressed with the disk dresser having an edge profile matching the profile of the normal plane of each of the teeth of the helical gear after grinding. In this way, it is possible to accurately dress the gear-shaped grinding wheel and also to change the edge profile of the gear-shaped grinding wheel without changing the edge profile of the disk dresser.

### BRIEF DESCRIPTION OF THE DRAWINGS

[Fig. 1] Fig. 1 is a view showing an hourglass gear-shaped grinding-wheel dressing method according to an embodiment of the present invention.
[Fig. 2] Fig. 2 is a view showing how a workpiece is ground by an hourglass gear-shaped grinding wheel.
[Fig. 3] Fig. 3 is a view showing a state where the workpiece and the hourglass gear-shaped grinding wheel are in mesh with each other.
[Fig. 4] Fig. 4 is a view showing a line on the workpiece along which it contacts the hourglass gear-shaped grinding wheel.
[Fig. 5] Fig. 5 is a view showing that the profile of the normal plane of each tooth of the workpiece and the edge profile of a disk dresser match each other.

### MODE FOR CARRYING OUT THE INVENTION

Hereinbelow, an hourglass gear-shaped grinding-wheel dressing method according to the present invention will be described in detail with reference to the drawings.

### EMBODIMENT

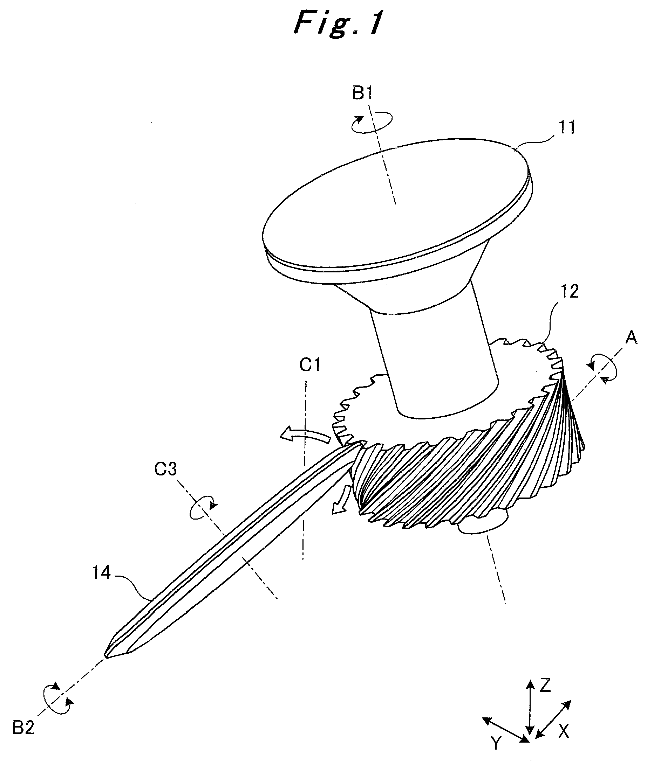

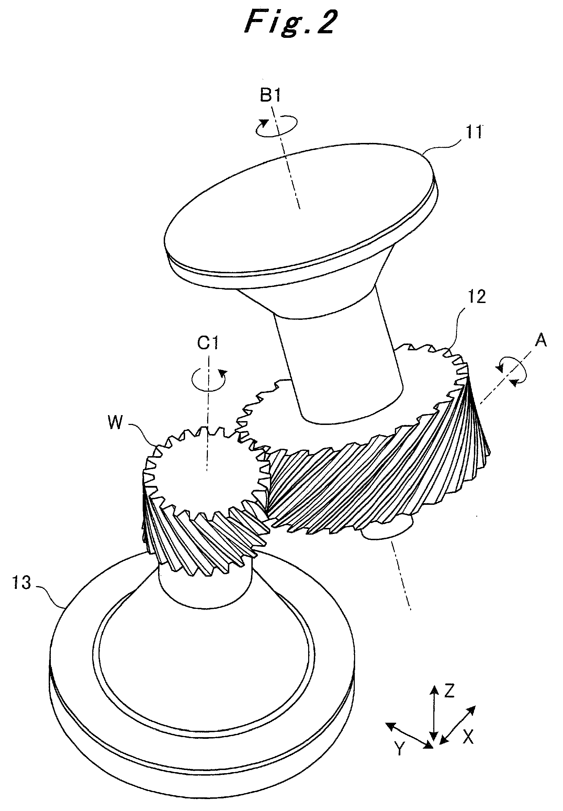

First, as shown in Fig. 2, a gear grinding machine (not shown) employing the dressing method according to the present invention is configured to grind a workpiece (machining-target gear) W which is a helical gear with an hourglass gear-shaped grinding wheel 12. Further, as shown in Fig. 1, the machine includes a dressing apparatus (not shown) configured to dress the gear-shaped grinding wheel 12 with a circular disk dresser 14 on the machine.

Next, the structure of the gear grinding machine will be described using Figs. 1 to 5.

As shown in Fig. 2, a rotary table 13 is supported on the gear grinding machine rotatably about a vertical workpiece rotation axis C1, and the workpiece W is detachably attached to the upper surface of this rotary table 13. Thus, the workpiece W can be rotated about the workpiece rotation axis C1 by rotationally driving the rotary table 13.

Moreover, a grinding-wheel spindle 11 is supported on the gear grinding machine rotatably about a grinding-wheel rotation axis B1, and the gear-shaped grinding wheel 12 is detachably attached to the lower end of this grinding-wheel spindle 11. Thus, the gear-shaped grinding wheel 12 can be rotated about the grinding-wheel rotation axis B1 by rotationally driving the grinding-wheel spindle 11.

Further, the grinding-wheel spindle 11 is supported movably in a horizontal X-axis direction (grinding-wheel cut-in direction), in a horizontal Y-axis direction perpendicular to the X-axis direction and a vertical Z-axis direction, and in the Z-axis direction, and is also supported turnably about a grinding-wheel turn axis A extending in the X-axis direction. Thus, the gear-shaped grinding wheel 12 can be moved in the X-, Y-, and Z-axis directions and the gear-shaped grinding wheel 12 can be turned about the grinding-wheel turn axis A by driving the grinding-wheel spindle 11.

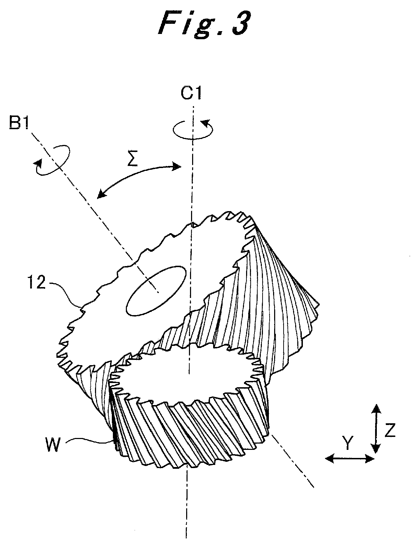

Moreover, as shown in Fig. 3, an axis crossing angle ∑ between the grinding-wheel rotation axis B1 of the gear-shaped grinding wheel 12 and the workpiece rotation axis C1 of the workpiece W can be adjusted in accordance with the helix angle of the workpiece W and the helix angle of the gear-shaped grinding wheel 12 by turning the gear-shaped grinding wheel 12 about the grinding-wheel turn axis A. In other words, the axis crossing angle ∑ is the angle at which the gear-shaped grinding wheel 12 is attached, and the gear-shaped grinding wheel 12 during grinding is set at this axis crossing angle ∑ and rotated about the grinding-wheel rotation axis B1.

Here, the gear-shaped grinding wheel 12 is in the form of a helix gear and is formed in such an hourglass shape as to increase in outer diameter from the center in the grinding-wheel width direction toward either end in the grinding-wheel width direction. Note that the hourglass shape representing the outer profile of the gear-shaped grinding wheel 12 in the grinding-wheel width direction is defined by a predetermined curvature in accordance with the axis crossing angle ∑, the outer diameter of the workpiece W, and the like.

Moreover, each edge surface of the gear-like grinding wheel 12 is formed continuously helically over the entire area of the gear-like grinding wheel 12 in the grinding-wheel width direction. Further, since the outer profile of the gear-like grinding wheel 12 is an hourglass shape, its helix angle gradually changes from the center in the grinding-wheel width direction toward either end in the grinding-wheel width direction.

Thus, with the gear-shaped grinding wheel 12 being disposed at a predetermined axis crossing angle ∑ and formed in a predetermined hourglass shape, the gear-shaped grinding wheel 12 and the workpiece W can mesh in line contact with each other. Then, from this meshing state, the gear-shaped grinding wheel 12 is swung in the Z-axis direction so that the workpiece W can be ground using the entire area of the gear-shaped grinding wheel 12 in the grinding-wheel width direction. In this process, the edge surfaces of the gear-shaped grinding wheel 12 grind the tooth surfaces of the workpiece W in the direction of the tooth trace of the workpiece W, i.e. in the helical direction of the workpiece W.

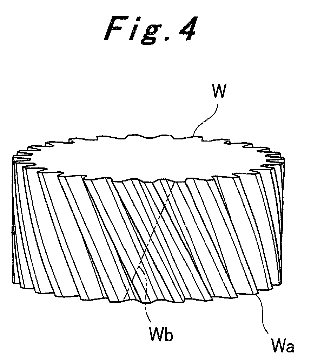

On the other hand, as shown in Fig. 4, the entire area of the workpiece W in the tooth width direction always meshes with the gear-shaped grinding wheel 12 during grinding in such a way as to be in line contact therewith. Wb denotes this line on the workpiece W along which it contacts the gear-shaped grinding wheel 12 during grinding. Moreover, since the gear-shaped grinding wheel 12 grinds the workpiece W in the direction of its helix as mentioned above, the contact line Wb during grinding is a line connecting the contours of the normal planes of teeth Wa of the workpiece W, the normal planes being perpendicular to the helical direction of the teeth Wa. Thus, the contact line Wb moves in the helical direction while always staying perpendicular to the helical direction.

Moreover, as shown in Fig. 1, the gear grinding machine is provided with the above-mentioned dressing apparatus, on which the disk dresser 14 is supported movably in the X-, Y-, and Z-axis directions and is also supported turnably about a dresser turn axis B2 and rotatably about a dresser rotation axis C3.

Note that the dresser turn axis B2 and the dresser rotation axis C3 are arranged in such a way as to perpendicularly cross each other at the center of the disk dresser 14. Specifically, the dresser turn axis B2 extends in the radial direction of the disk dresser 14 while the dresser rotation axis C3 is arranged coaxially with the center axis of the disk dresser 14.

Thus, by driving the dressing apparatus, the disk dresser 14 can be moved between a dressing position at which the disk dresser 14 can dress the gear-shaped grinding wheel 12 and a retreat position at which the disk dresser 14 is retreated from this dressing position. Further, by driving the dressing apparatus, the disk dresser 14 can be turned about the dresser turn axis B2 in accordance with the helix angle of the gear-shaped grinding wheel 12, and the disk dresser 14 can be rotated about the dresser rotation axis C3 as well.

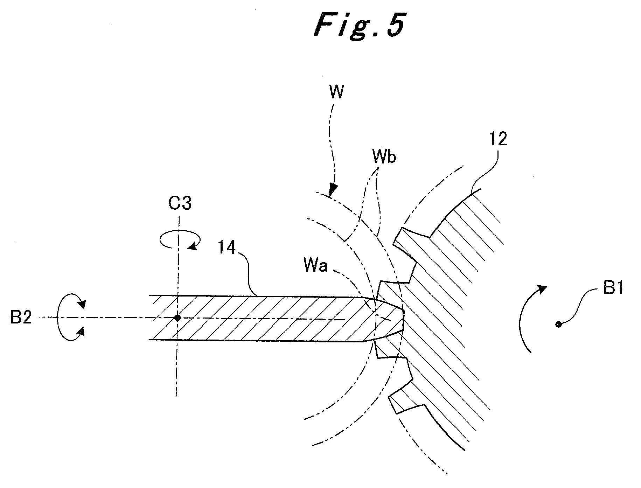

Moreover, as shown in Fig. 5, the edge profile of the disk dresser 14 matches the cross-sectional profile of each tooth Wa of the workpiece W after grinding taken along the contact line Wb, i.e. the profile of the normal plane of each tooth Wa of the workpiece W after grinding, the normal plane being perpendicular to the helical direction of the tooth Wa. In this way, the mesh between the disk dresser 14 and the gear-shaped grinding wheel 12 during dressing and the mesh between the gear-shaped grinding wheel 12 and the workpiece W during grinding can match each other.

Next, the operation of the gear grinding machine will be described using Figs. 1, 2, 3, and 5.

As shown in Figs. 2 and 3, to grind the workpiece W with the gear-shaped grinding wheel 12, the workpiece W is first mounted on the rotary table 11, and the gear-shaped grinding wheel 12 is then moved in the X-, Y-, and Z-axis directions and turned about the grinding-wheel turn axis A. As a result, the gear-shaped grinding wheel 12 is set at the axis crossing angle ∑ and meshes with the workpiece W.

Thereafter, from the above meshing state, the gear-shaped grinding wheel 12 is rotated about the grinding-wheel rotation axis B1 and the workpiece W is rotated about the workpiece rotation axis C1.

Then, the gear-shaped grinding wheel 12 is caused to cut in in the X-axis direction, and this gear-shaped grinding wheel 12 is then swung in the Z-axis direction. Thus, the gear-shaped grinding wheel 12 uses the entire area thereof in the grinding-wheel width direction to grind the workpiece W.

As a result, large slip occurs between edge surfaces of the gear-shaped grinding wheel 12 and tooth surfaces of the workpiece W due to synchronous rotation of the gear-shaped grinding wheel 12 and the workpiece W and the axis crossing angle ∑ therebetween. Accordingly, the edge surfaces of the gear-shaped grinding wheel 11 finely grind the tooth surfaces of the workpiece W.

Here, as the gear-shaped grinding wheel 12 is used to grind a predetermined number of workpieces W, each edge surface wears and loses its sharpness. Thus, the gear-shaped grinding wheel 12 is regularly dressed with the disk dresser 14. Moreover, the gear-shaped grinding wheel 12 is dressed using the disk dresser 14 not only for the wear of the edge surface of the gear-shaped grinding wheel 12 but also for subtle correction of the tooth profile of the workpiece W or simply for change in the tooth profile of the workpiece W.

Furthermore, the gear grinding machine of this embodiment employs any one of the following two dressing methods as the method of dressing the hourglass gear-shaped grinding wheel 12 with the disk dresser 14.

Now, in a first dressing method, as shown in Fig. 1, the disk dresser 14 is first moved from the retreat position to the dressing position, and this disk dresser 14 positioned at the dressing position is positioned by turning it about the dresser turn axis B2 to a predetermined turn angle in accordance with the helix angle of the gear-shaped grinding wheel 12.

Then, the gear-shaped grinding wheel 12 is moved in the X-, Y-, and Z-axis directions and turned about the grinding-wheel turn axis A. As a result, as shown in Fig. 5, the gear-shaped grinding wheel 12 is set at the axis crossing angle ∑ and meshes with the disk dresser 14.

Then, from the above meshing state, the gear-shaped grinding wheel 12 is rotated about the grinding-wheel rotation axis B1 and moved in the X-, Y-, and Z-axis directions in accordance with the hourglass shape and the helix angle of the gear-shaped grinding wheel 12. At the same time, the disk dresser 14 is rotated about the dresser rotation axis C3, and is turned about the workpiece rotation axis C1 in accordance with the helix angle of the gear-shaped grinding wheel 12. As a result, the edge surface of the disk dresser 14 dresses edge surfaces of the gear-shaped grinding wheel 12.

Then, the above dressing operation is performed the number of times equal to the number of the spaces between the edges of the gear-shaped grinding wheel 12. Once the dressing operations for all the spaces between the edges are finished, the disk dresser 14 is moved from the dressing position to the retreat position and set to a standby state.

Moreover, in a second dressing method, as shown in Fig. 1, the disk dresser 14 is first moved from the retreat position to the dressing position.

Then, the gear-shaped grinding wheel 12 is moved in the X-, Y-, and Z-axis directions and tuned about the grinding-wheel turn axis A. As a result, as shown in Fig. 5, the gear-shaped grinding wheel 12 is set at the axis crossing angle ∑ and meshes with the disk dresser 14.

Then, from the above meshing state, the gear-shaped grinding wheel 12 is rotated about the grinding-wheel rotation axis B1 and moved in the X-, Y-, and Z-axis directions in accordance with the hourglass shape and the helix angle of the gear-shaped grinding wheel 12. At the same time, the disk dresser 14 is rotated about the dresser rotation axis C3, and is turned about the dresser turn axis B2 in accordance with the helix angle of the gear-shaped grinding wheel 12. As a result, the edge surface of the disk dresser 14 dresses edge surfaces of the gear-shaped grinding wheel 12.

Then, the above dressing operation is performed the number of times equal to the number of the spaces between the edges of the gear-shaped grinding wheel 12. Once the dressing operations for all the spaces between the edges are finished, the disk dresser 14 is moved from the dressing position to the retreat position and set to a standby state.

Note that in the embodiment described above, during dressing, the gear-shaped grinding wheel 12 is moved in the X-, Y-, and Z-axis directions, which are the directions of three perpendicular axes, in accordance with the hourglass shape and the helix angle of the gear-shaped grinding wheel 12; however, the gear-shaped grinding wheel 12 and the disk dresser may be moved relative to each other in the X-, Y-, and Z-axis directions.

Thus, in the hourglass gear-shaped grinding-wheel dressing method according to the present invention, the hourglass gear-shaped grinding wheel 12 capable of coming into line contact with the workpiece W in such a way as to connect the contours of the normal planes of teeth Wa of the workpiece W, is dressed with the disk dresser 14 having an edge profile matching the profile of the normal plane of each tooth Wa of the workpiece W after grinding. In this way, it is possible to accurately dress the gear-shaped grinding wheel 12 and also to change the edge profile of the gear-shaped grinding wheel 12 and the tooth profile of the workpiece W without changing the edge profile of the disk dresser 14.

### INDUSTRIAL APPLICABILITY

The present invention is applicable to hourglass gear-shaped grinding-wheel dressing methods capable of shortening dressing time.

## Claims

1. An hourglass gear-shaped grinding-wheel dressing method of dressing an hourglass gear-shaped grinding wheel (12) with a disk dresser (14) formed in a circular disk shape, by synchronously rotating the gear-shaped grinding wheel (12) and the disk dresser (14) in mesh with each other, the gear-shaped grinding wheel being configured to grind a helical gear by coming into line contact with the helical gear in such a way as to connect contours of normal planes of teeth of the helical gear, the normal planes being perpendicular to a helical direction of the teeth, **characterized in that** the hourglass gear-shaped grinding-wheel dressing method comprises:
matching an edge profile of the disk dresser (14) with a profile of the normal plane of each of the teeth of the helical gear after grinding;
moving the gear-shaped grinding wheel (12) and the disk dresser (14) relative to each other in directions of three perpendicular axes (x,y,z) in accordance with a hourglass shape and a helix angle of the gear-shaped grinding wheel;
turning the disk dresser (14) about a dresser turn axis (B2) to a predetermined turn angle in accordance with the helix angle of the gear-shaped grinding wheel and positioning the disk dresser at the predetermined turn angle, the dresser turn axis perpendicularly crossing a dresser rotation axis of the disk dresser; and
turning the disk dresser about a gear rotation axis (C1) of the helical gear.

2. An hourglass gear-shaped grinding-wheel dressing method of dressing an hourglass gear-shaped grinding wheel with a disk dresser (14) formed in a circular disk shape, by synchronously rotating the gear-shaped grinding wheel (12) and the disk dresser (14) in mesh with each other, the gear-shaped grinding wheel (12) being configured to grind a helical gear by coming into line contact with the helical gear in such a way as to connect contours of normal planes of teeth of the helical gear, the normal planes being perpendicular to a helical direction of the teeth, **characterized in that** the hourglass gear-shaped grinding-wheel (12) dressing method comprises:
matching an edge profile of the disk dresser (14) with a profile of the normal plane of each of the teeth of the helical gear after grinding;
moving the gear-shaped grinding wheel (12) and the disk dresser (14) relative to each other in directions of three perpendicular axes in accordance with a hourglass shape and a helix angle of the gear-shaped grinding wheel (12); and
turning the disk dresser (14) about a dresser turn axis in accordance with the helix angle of the gear-shaped grinding wheel, the dresser turn axis perpendicularly crossing a dresser rotation axis of the disk dresser.

## Patentansprüche

1. Abrichtverfahren für ein sanduhr-zahnradförmiges Schleifrad zum Abrichten eines sanduhrförmigen, zahnradförmigen Schleifrads (12) mit einem Scheiben-Abrichtgerät (14) von kreisförmiger Scheibenform durch synchrones Rotieren des zahnradförmigen Schleifrads (12) und des Scheiben-Abrichtgeräts (14) in Eingriff miteinander, wobei das zahnradförmige Schleifrad zum Schleifen eines Schrägzahnrads ausgebildet ist, indem es mit dem Schrägzahnrad in Linienkontakt kommt, so dass die Konturen von Normalebenen von Zähnen des Schrägzahnrads verbunden sind, wobei die Normalebenen senkrecht zu einer Schraubenrichtung der Zähne sind, **dadurch gekennzeichnet, dass** das Abrichtverfahren für ein sanduhr-zahnradförmiges Schleifrad umfasst:
Anpassen eines Kantenprofils des Scheiben-Abrichtgeräts (14) an ein Profil der Normalebene jedes Zahns des Schrägzahnrads nach dem Schleifen;
Bewegen des zahnradförmigen Schleifrads (12) und des Scheiben-Abrichtgeräts (14) relativ zueinander in Richtungen der drei zueinander senkrechten Achsen (x, y, z) entsprechend einer Sanduhrform und eines Spiralwinkels des zahnradförmigen Schleifrads;
Schwenken des Scheiben-Abrichtgeräts (14) um eine Abrichtgerät-Schwenkachse (B2) um einen vorbestimmten Drehwinkel entsprechend des Spiralwinkels des zahnradförmigen Schleifrads und Positionieren des Scheiben-Abrichtgeräts in dem vorbestimmten Drehwinkel, wobei die Abrichtgerät-Schwenkachse eine Abrichtgerät-Rotationsachse des Scheiben-Abrichtgeräts senkrecht kreuzt; und
Rotieren des Scheiben-Abrichtgeräts um eine Zahnrad-Rotationsachse (C1) des Schrägzahnrads.

2. Abrichtverfahren für ein sanduhr-zahnradförmiges Schleifrad zum Abrichten eines sanduhr-zahnradförmigen Schleifrads mit einem Scheiben-Abrichtgerät (14) von kreisförmiger Scheibenform durch synchrones Rotieren des zahnradförmigen Schleifrads (12) und des Scheiben-Abrichtgeräts (14) in Eingriff miteinander, wobei das zahnradförmige Schleifrad (12) zum Schleifen eines Schrägzahnrads ausgebildet ist, indem es mit dem Schrägzahnrad in Linienkontakt kommt, so dass die Konturen von Normalebenen von Zähnen des Schrägzahnrads verbunden werden, wobei die Normalebenen senkrecht zu einer Schraubenrichtung der Zähne sind, **dadurch gekennzeichnet, dass** das Abrichtverfahren für ein sanduhr-zahnradförmiges Schleifrad (12) umfasst:
Anpassen eines Kantenprofils des Scheiben-Abrichtgeräts (14) an ein Profil der Normalebene jedes Zahns des Schrägzahnrads nach dem Schleifen;
Bewegen des zahnradförmigen Schleifrads (12) und des Scheiben-Abrichtgeräts (14) relativ zueinander in Richtungen der drei zueinander senkrechten Achsen (x, y, z) entsprechend einer Sanduhrform und eines Spiralwinkels des zahnradförmigen Schleifrads (12); und
Schwenken des Scheiben-Abrichtgeräts (14) um eine Abrichtgerät-Schwenkachse entsprechend des Spiralwinkels des zahnradförmigen Schleifrads, wobei die Abrichtgerät-Drehachse eine Abrichtgerät-Drehachse des Scheiben-Abrichtgeräts senkrecht kreuzt.

## Revendications

1. Méthode de dressage pour meule en forme de roue dentée en forme de sablier pour le dressage d'une meule en forme de roue dentée en forme de sablier (12) avec un dresseur à disque (14) réalisé en forme de disque circulaire, par la rotation synchrone de la meule en forme de roue dentée (12) et du dresseur à disque (14) en prise l'un avec l'autre, la meule en forme de roue dentée étant configurée pour meuler une roue dentée hélicoïdale en venant en contact linéaire avec la roue dentée hélicoïdale de manière à connecter des contours de plans normaux de dents de la roue dentée hélicoïdale, les plans normaux étant perpendiculaires à une direction hélicoïdale des dents, **caractérisée en ce que** la méthode de dressage de meule en forme de roue dentée en forme de sablier comprend :
la correspondance d'un profil d'arête du dresseur à disque (14) avec un profil du plan normal de chacune des dents de la roue dentée hélicoïdale après le meulage ;
le déplacement de la meule en forme de roue dentée (12) et du dresseur à disque (14) l'un par rapport à l'autre dans des directions de trois axes perpendiculaires (x, y, z) selon une forme de sablier et un angle d'hélice de la meule en forme de roue dentée ;
la rotation du dresseur à disque (14) autour d'un axe de tour de dresseur (B2) à un angle de tour prédéterminé selon l'angle d'hélice de la meule en forme de roue dentée et le positionnement du dresseur à disque selon l'angle de tour prédéterminé, l'axe de tour de dresseur croisant perpendiculairement un axe de rotation de dresseur du dresseur à disque ; et
la rotation du dresseur à disque autour d'un axe de rotation de roue dentée (C1) de la roue dentée hélicoïdale.

2. Méthode de dressage pour meule en forme de roue dentée en forme de sablier pour le dressage d'une meule en forme de roue dentée en forme de sablier avec un dresseur à disque (14) réalisé dans une forme de disque circulaire, par la rotation synchrone de la meule en forme de roue dentée (12) et du dresseur à disque (14) en prise l'un avec l'autre, la meule en forme de roue dentée (12) étant configurée pour meuler une roue dentée hélicoïdale en venant en contact linéaire avec la roue dentée hélicoïdale de manière à connecter des contours de plans normaux de dents de la roue dentée hélicoïdale, les plans normaux étant perpendiculaires à une direction hélicoïdale des dents, **caractérisée en ce que** la méthode de dressage de meule (12) en forme de roue dentée en forme de sablier comprend :
la correspondance d'un profil d'arête du dresseur à disque (14) avec un profil du plan normal de chacune des dents de la roue dentée hélicoïdale après le meulage ;
le déplacement de la meule en forme de roue dentée (12) et du dresseur à disque (14) l'un par rapport à l'autre dans des directions de trois axes perpendiculaires selon une forme de sablier et un angle d'hélice de la meule en forme de roue dentée (12) ; et
la rotation du dresseur à disque (14) autour d'un axe de tour de dresseur selon l'angle d'hélice de la meule en forme de roue dentée, l'axe de tour de dresseur croisant perpendiculairement un axe de rotation de dresseur du dresseur à disque.
